# EUROPEAN PATENT APPLICATION

(11) **EP 3 812 616 A1**
(43) Date of publication of application: **28.04.2021**
(21) Application number: 20168166.5
(22) Date of filing: 06.04.2020
(51) Int. Cl.: F16H 3/093, F16H 3/097, F16H 61/04, F16H 3/12

(54) **ELECTRIC VEHICLE DRIVING APPARATUS**

(30) Priority: 22.10.2019 KR 20190131665
(71) Applicant: LG Electronics Inc., 07336 SEOUL (KR)
(72) Inventor: PARK, Yongsik, 06772 Seoul (KR); AHN, Youngchan, 06772 Seoul (KR); SUNG, Changwoo, 06772 Seoul (KR); LEE, Junggu, 06772 Seoul (KR)
(74) Representative: Vossius & Partner Patentanwälte Rechtsanwälte mbB

(57) **Abstract**

An electric vehicle driving apparatus is disclosed. The electric vehicle driving apparatus may include a driving motor, a plurality of shafts, a plurality of gears, a synchronizer, and a clutch. The electric vehicle driving apparatus may have a coaxial structure in which an input shaft and an output shafts are arranged coaxially, and may further include a bypass shaft that functions as a bypass path upon shifting. The electric vehicle driving apparatus may improve a spatial usability and may improve a shifting feeling by minimizing a shifting impact by continuously transmitting power despite a shifting operation.

## Description

### CROSS-REFERENCE TO RELATED APPLICATION

This application claims the benefit of Korean Patent Application No. 10-2019-0131665, filed on October 22, 2019, in the Korean Intellectual Property Office, the disclosure of which is incorporated herein in its entirety by reference.

### BACKGROUND

### 1. Field

The present disclosure relates to an electric vehicle driving apparatus.

### 2. Description of the Related Art

There are increasing demands for electric vehicles running on electricity to replace vehicles running on petroleum (or a combination of electricity and petroleum) that causes pollution.

Since an electric vehicle drives wheels using electric power charged in a battery provided in the electric vehicle, various developments have been carried out to maximize a driving distance by minimizing the weight and volume of the electric vehicle.

For existing electric vehicles, a method for driving a wheel by decelerating power of a driving motor by a simple decelerator has been applied. Yet, with increasing demands for electric vehicles capable of driving at high speed with high performance, it is required for the electric vehicles to provide a shift function with two or more shift speeds. Regarding a transmission of an electric vehicle, a related art has been published.
1. Korean Patent Publication No. 10-2013-0013283 (Publication Date: February 6, 2013)
2. Title: TWO-SPEED TRANSMISSION FOR ELECTRIC VEHICLE

In the related art, there is disclosed a two-speed transmission for an electric vehicle to implement two-speed transmission by combining one friction clutch with two one-way clutches or by combining one friction clutch with one bidirectional clutch.

### SUMMARY

An existing two-speed transmission for an electric vehicle including the related document is designed in a manner in which three shafts including an input shaft, a power transmission shaft, and an output shaft are disposed on different axes in an offset-wise manner. In this case, an area from a motor connected to the input shaft all the way to the output shaft is occupied by the transmission. As a result, it may be difficult to utilize a space of the electric vehicle.

Further, the existing two-speed transmission for the electricity vehicle including the related document implements the two-speed transmission by combining two or more friction clutches, by combining one friction clutch and two one-way clutches, or by combining one friction clutch and one bidirectional clutch. As a result, there may be problems due to an increase in volume of the transmission and weight of the electric vehicle, thereby reducing power efficiency and increasing a manufacturing cost.

Further, the existing two-speed transmission for the electric vehicle, including that in the related document, has a problem of failing to consider a shifting impact that is delivered to a user since power to be transmitted to a wheel in a shifting procedure is blocked. If additional design is devised in consideration of the aforementioned problem, the transmission may increase in volume, weight, and manufacturing cost and may become more complex in configuration.

According to example embodiments of the present disclosure, there are provided an electric vehicle driving apparatus capable of improving spatial usability of an inner configuration of an electric vehicle, providing a multi-speed shift function using a minimum number of components, and minimizing a transmission impact.

An aspect provides an electric vehicle driving apparatus in which an input shaft connected to a driving motor and an output shaft connected to a wheel are arranged coaxially. The apparatus may include a structure in which power generated by the driving motor is transmitted to the wheel through a shift shaft when driving at a first speed or a second speed, and the power is continuously transmitted to the wheel through a bypass shaft when changing a speed.

According to an aspect, there is provided an electric vehicle driving apparatus, including a plurality of shafts including an input shaft, an output shaft arranged coaxially with the input shaft, a shift shaft spaced apart from the input shaft, and a bypass shaft, a plurality of motor gears coupled with an outer circumferential surface of the input shaft, a plurality of shift gears externally engaged with any one motor gear from the plurality of motor gears and selectively coupled with the shift shaft in accordance with an operation of a synchronizer, a plurality of bypass gears coupled with an outer circumferential surface of the bypass shaft, and comprising a first bypass gear externally engaged with any one motor gear from the plurality of motor gears and a second bypass gear spaced apart from the first bypass gear, a plurality of output gears comprising a fist output gear coupled with an outer circumferential surface of the shift shaft and a second output gear externally coupled with the second bypass gear, and a clutch configured to selectively allow power transmission between the first bypass gear and the second bypass gear.

The clutch may be configured to, when the synchronizer couples any one shift gear from the plurality of shift gears with the shift shaft, restrict the power transmission between the first bypass gear and the second bypass gear and, when the synchronizer decouples the plurality of shift gears from the shift shaft, operate to allow the power transmission between the first bypass gear and the second bypass gear.

The synchronizer may include a sleeve that relatively moves in an axial direction of the shift shaft. In response to the sleeve being engaged with any one shift gear from the plurality of shift gears, the synchronizer may couple the any one shift gear with the shift shaft, the any one shift gear engaged with the sleeve.

The second output gear may be coupled with an outer circumferential surface of the output shaft to rotate about a rotation axis of the output shaft.

The plurality of motor gears may include a first motor gear and a second motor gear. The plurality of shift gears may include a first shift gear externally engaged with the first motor gear and a second shift gear externally engaged with the second motor gear. The first bypass gear may be externally engaged with the second motor gear.

A third speed gear ratio of power transmitted through the second motor gear, the first bypass gear, the second bypass gear, and the second output gear may range between a first speed gear ratio of power transmitted through the first motor gear, the first shift gear, and the first output gear and a second speed gear ratio of power transmitted through the second motor gear, the second shift gear, and the first output gear.

The clutch may include a friction clutch.

The electric vehicle driving apparatus may further include a differential gear disposed at an outside of the output shaft and configured to selectively receive power from the first output gear or the second output gear.

The electric vehicle driving apparatus may further include a processor may be configured to control operations of the synchronizers and the clutch based on an electric signal.

The processor may be configured to, based on a first signal, control the synchronizer to decouple any one shift gear from the plurality of shift gears from the shift shaft, and engage the clutch to allow the power transmission between the first bypass gear and the second bypass gear, and, based on a second signal, disengage the clutch to restrict the power transmission between the first bypass gear and the second bypass gear, and control the synchronizer to couple any one shift gear from the plurality of shift gears with the shift shaft.

The differential gear may be configured to, when the synchronizer and the clutch are controlled based on the first signal, receive power of the driving motor through the first output gear, and, when the synchronizer and the clutch are controlled based on the second signal, receive the power of the driving motor through the second output gear.

The input shaft may be configured as a hollow shaft, and the output shaft may be configured as a solid shaft.

The power transmitted from the driving motor to the input shaft may be, based on operations of the synchronizer and the clutch, transmitted to the differential gear through the shift shaft and the first output gear or transmitted to the differential gear through the bypass shaft and the second output gear.

The clutch may be configured to, when the synchronizer is in a synchronizing state in which any one shift gear from the plurality of shift gears is coupled with the shift shaft, restrict the power transmission between the first bypass gear and the second bypass gear, and, when the synchronizer is in a shifting state in which the plurality of shift gears is decoupled from the shift shaft, operate to allow the power transmission between the first bypass gear and the second bypass gear.

The power generated by the driving motor may be transmitted to the differential gear through the input shaft, the shift shaft, and the first output gear in the synchronizing state, and may be transmitted to the differential gear through the input shaft, the bypass shaft, and the output shaft in the shifting state.

The first output gear may be arranged to be externally engaged with the differential gear.

The plurality of gears may have different numbers of teeth.

### BRIEF DESCRIPTION OF THE DRAWINGS

The above and other aspects, features, and advantages of certain embodiments will be more apparent from the following detailed description taken in conjunction with the accompanying drawings, in which:
FIGS. 1A and 1B are diagrams illustrating an electric vehicle driving apparatus according to example embodiments of the present disclosure;
FIGS. 2A and 2B are diagrams illustrating an operational state of an electric vehicle driving apparatus according to an example embodiment of the present disclosure;
FIGS. 3A and 3B are diagrams illustrating an operational state of an electric vehicle driving apparatus according to an example embodiment of the present disclosure;
FIGS. 4A and 4B are diagrams illustrating an operational state of an electric vehicle driving apparatus according to an example embodiment of the present disclosure; and
FIGS. 5A and 5B are diagrams schematically illustrating an electric vehicle driving apparatus according to example embodiments of the present disclosure.

### DETAILED DESCRIPTION

Hereinafter, preferred embodiments of the present disclosure will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the present disclosure, moreover, the detailed description will be omitted when a specific description for publicly known technologies to which the present disclosure pertains is judged to obscure the gist of the present disclosure. Also, it should be noted that the accompanying drawings are merely illustrated to easily explain the concept of the present disclosure, and therefore, they should not be construed to limit the technological concept disclosed herein by the accompanying drawings.

The terms 'first', 'second', etc. may be used to describe various components, but the components are not limited by such terms. The terms are used only for the purpose of distinguishing one component from other components.

When an arbitrary component is described as "being connected to" or "being linked to" another component, this should be understood to mean that still another component(s) may exist between them, although the arbitrary component may be directly connected to, or linked to, the corresponding other component. In contrast, when an arbitrary component is described as "being directly connected to" or "being directly linked to" another component, this should be understood to mean that no component exists between them.

A singular expression can include a plural expression as long as it does not have an apparently different meaning in context.

In the present application, the terms "include" and "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

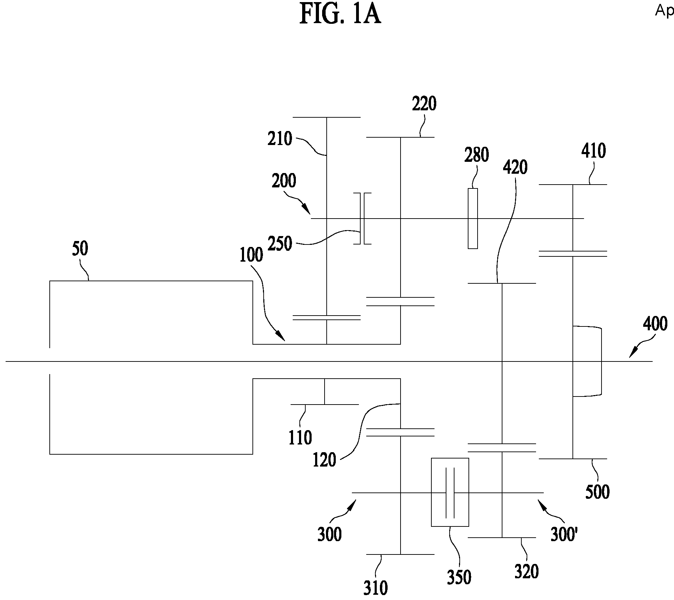

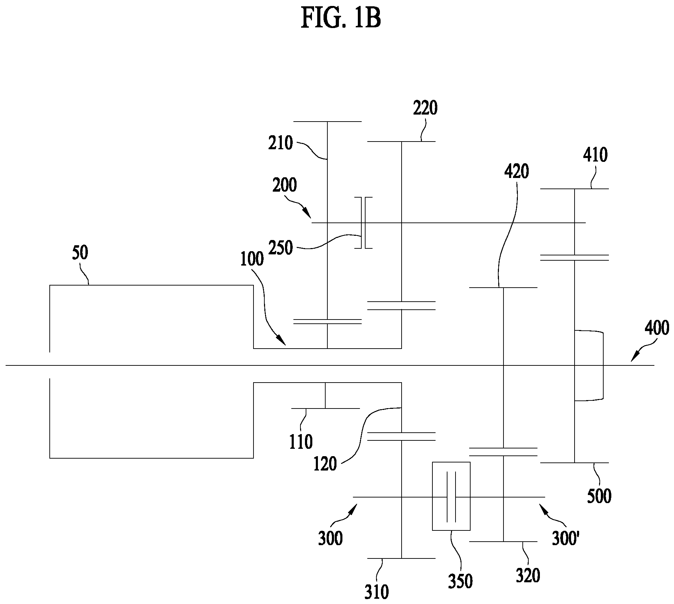

FIGS. 1A and 1B are diagrams illustrating an electric vehicle driving apparatus according to various embodiments of the present disclosure.

Referring to FIGS. 1A and 1B, an electric vehicle driving apparatus according to various example embodiments of the present disclosure may include a driving motor 50 and a transmission (or a gearbox) that transmits power from the driving motor 50 to a wheel.

The driving motor 50 may include a device for generating power using a battery included in an electric vehicle. The battery may be a component provided to supply power to the electric vehicle, and may include a repetitively chargeable and dischargeable secondary cell or fuel cell.

The power generated by the driving motor 50 may be decelerated or shifted in the transmission and provided to the wheel.

The transmission may include a plurality of shafts, a plurality of gears, a synchronizer 250 that selectively connects to at least one of these components, and a clutch 350.

The plurality of shafts may include an input shaft 100 directly connected to the driving motor 50, a shift shaft 200 indirectly connected to the driving motor 50 through a gear, a bypass shaft 300, 300', and an output shaft 400.

For example, the input shaft 100 may be directly connected to the driving motor 50 to receive power directly from the driving motor 50.

The shift shaft 200 and the bypass shaft 300, 300' may be spaced apart from the input shaft 100 to extend in an axial direction. The shift shaft 200 and the bypass shaft 300, 300' may selectively receive power from the input shaft 100.

The output shaft 400 may be disposed coaxially with the input shaft 100. The output shaft 400 may be connected to a wheel (e.g., a front wheel and/or a rear wheel) of the electric vehicle. The output shaft 400 may receive power from the shift shaft 200 or the bypass shaft 300, 300' and provide the power to the wheel.

For example, as illustrated in FIGS. 1A and 1B, the input shaft 100 and the output shaft 400 may be arranged coaxially with the driving motor 50. For example, the input shaft 100 may be configured as a hollow shaft and the output shaft 400 may be configured as a solid shaft. In this example, the input shaft 100 and the output shaft 400 may be arranged on one axis.

In the electric vehicle driving apparatus according to various example embodiments of the present disclosure, the input shaft 100 and the output shaft 400 may be arranged on a same axis, which may ensure an easier design implementation in terms of a positional relationship with other components in the electric vehicle.

For example, when the input shaft 100 and the output shaft 400 are arranged on different axes in the electric vehicle driving apparatus as an offset-wise manner, a relatively large volume may be occupied in a radial direction of the input shaft 100 in comparison to the electric vehicle driving apparatus in which the input shaft 100 and the output shaft 400 are arranged coaxially with each other. In this case, a location in which other components are to be arranged may be relatively restricted. According to example embodiments of the present disclosure, a spatial usability of the electric vehicle may be maximized as the input shaft 100 and the output shaft 400 are arranged coaxially with the driving motor 500 and the wheel.

In example embodiments, the shift shaft 200 and the bypass shaft 300 may be spaced apart from the input shaft 100 and the output shaft 400 to be parallel to each other. However, aspects of the present disclosure are not limited thereto, and various design modification is possible depending on a positional relationship between components of the electric vehicle. For example, the respective shafts, that is, the input shaft 100 and the shift shaft 200 or the input shaft 100 and the bypass shaft 300, 300' may be arranged to have a predetermined angle therebetween but not to be parallel.

The plurality of gears may include a plurality of motor gears, a plurality of shift gears, a plurality of bypass gears, a plurality of output gears, and a differential gear 500.

The plurality of motor gears may include a first motor gear 110 and a second motor gear 120. For example, the first motor gear 110 and the second motor gear 120 may be integrally coupled with the input shaft 100 at an outer circumferential surface of the input shaft 100 and rotate about a rotation axis of the input shaft 100.

The plurality of shift gears may include a first shift gear 210 and a second shift gear 220. For example, the first shift gear 210 and the second shift gear 220 may be disposed to be rotatable about the axis of the shift shaft 200.

The plurality of shift gears may be engaged with any one motor gear from the plurality of motor gears. For example, as illustrated in FIGS. 1A and 1B, the first shift gear 210 may be disposed to be externally engaged with the first motor gear 110, and the second shift gear 220 may be disposed to be externally engaged with the second motor gear 120.

The first shift gear 210 and the second shift gear 220 may have different numbers of teeth. A first speed gear ratio of power transmitted through the first shift gear 210 and the first motor gear 110 and a second speed gear ratio of power transmitted through the second shift gear 220 and the second motor gear 120 may be different.

The plurality of shift gears may be selectively coupled to the shift shaft 200 to rotate integrally with the shift shaft 200 or rotate independently of the shift shaft 200. For example, any one shift gear from the plurality of shift gears and the shift shaft 200 may be coupled with or decoupled from the shift shaft 200 through the synchronizer 250.

The electric vehicle driving apparatus according to example embodiments of the present disclosure may provide a shift function in a manner of selectively coupling any one shift gear from the plurality of shift gears having different gear ratios with the shift shaft 200 through an operation of the synchronizer 250.

For example, the synchronizer 250 may include a sleeve configured to relatively move in an axial direction at an outside of the shift shaft 200. In response to mechanical coupling with the sleeve of the synchronizer 250, any one shift gear from the plurality of shift gears may be coupled with the shift shaft 200 to rotate integrally with the shift shaft 200. The other shift gear not coupled with the sleeve in the plurality of shift gears may rotate independently of the shift shaft 200.

The plurality of bypass gears may include a first bypass gear 310 and a second bypass gear 320.

The first bypass gear 310 and the second bypass gear 320 may be coupled with an outside (e.g., an outer circumferential surface) of the bypass shaft 300, 300' and rotate about a rotation axis of the bypass shaft 300, 300'.

The first bypass gear 310 may be disposed to be externally engaged with any one motor gear from the plurality of motor gears. For example, as illustrated in FIGS. 1A and 1B, the first bypass gear 310 may be disposed to be externally engaged with the second motor gear 120.

The second bypass gear 320 may be spaced a predetermined distance apart from the first bypass gear 310 in an axial direction, and may be disposed to be externally engaged with a second output gear 420 which will be described later on.

The clutch 350 may be further disposed at an outside of the bypass shaft 300, 300'. The electric vehicle driving apparatus may selectively restrict power transmission between the first bypass gear 310 and the second bypass gear 320 based on an operation of the clutch 350 (e.g., an engagement or a disengagement of the clutch 350).

For example, in response to the engagement of the clutch 350, power (e.g., a torque) of the first bypass gear 310 may be transmitted to the second bypass gear 320 through the bypass shaft 300, 300'. Also, in response to the disengagement of the clutch 350, the power transmission between the first bypass gear 310 and the second bypass gear 320 may be restricted to prevent the power of the first bypass gear 310 from being transmitted to the second bypass gear 320 through the bypass shaft 300, 300'.

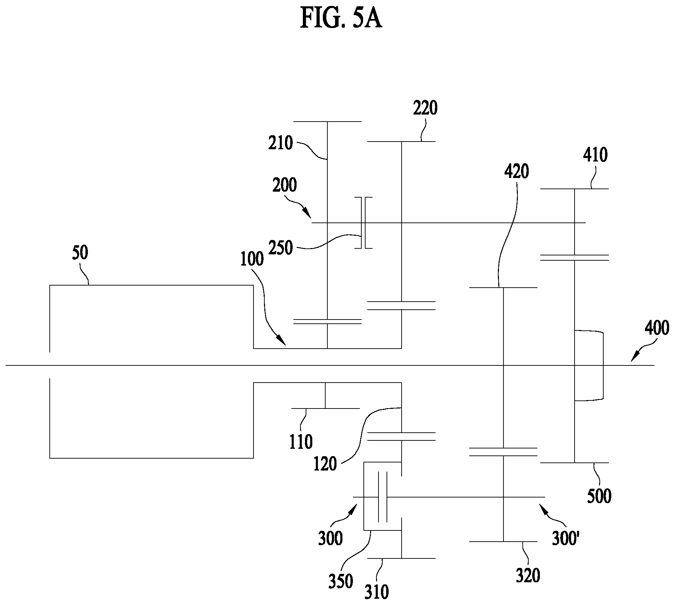

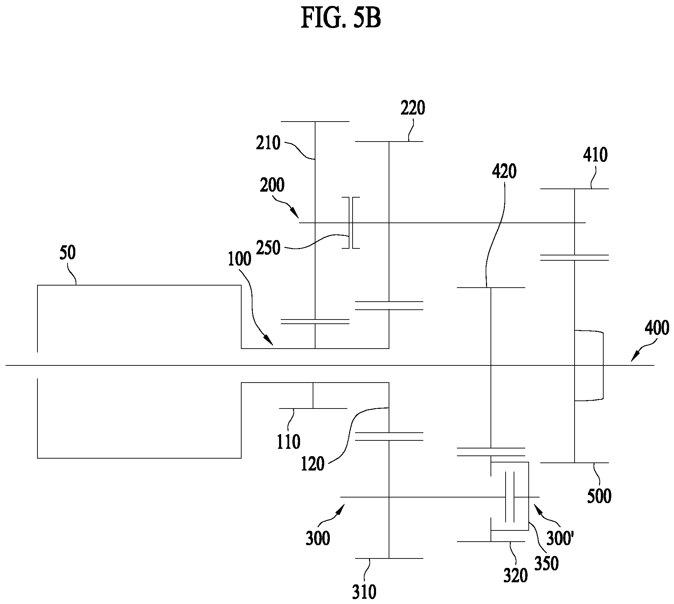

The clutch 350 may be any one of various types of friction clutches, and may be operable through any one of a mechanical, hydraulic, and electronic methods, for example. Various positions of the clutch 350 will be further described with reference to FIGS. 5A and 5B.

The plurality of output gears may include the first output gear 410 and the second output gear 420.

For example, the first output gear 410 may be coupled with an outside of the first shift shaft 200 to rotate along with the shift shaft 200 about a rotation shaft of the shift shaft 200.

Also, the second output gear 420 may be coupled with an outside of the output shaft 400 to rotate about a rotation axis of the output shaft 400. At this point, the second output gear 420 may be disposed to be externally engaged with the second bypass gear 320 and may receive power (e.g., a torque) from the second bypass gear 320.

The differential gear 500 may be disposed to be rotatable about the rotation axis of the output shaft 400 connected to the wheel.

The differential gear 500 may receive the power from the first output gear 410 or the second output gear 420 and drive the wheel connected to the output shaft 400 using the received power.

The differential gear 500 may continuously receive the power of the driving motor 50 from the first output gear 410 or the second output gear 420. For example, the differential gear 500 may be engaged with at least one of the first output gear 410 or the second output gear 420 to be driven in response to the first output gear 410 or the second output gear 420 rotating.

In the electric vehicle driving apparatus according to example embodiments of the present disclosure, while the driving motor 50 provides the power, the first output gear 410 or the second output gear 420 may be selectively driven based on the operations of the synchronizer 250 and the clutch 350. For example, the second output gear 420 may not be driven while the first output gear 410 is driven, and the first output gear 410 may not be driven while the second output gear 420 is driven.

For example, in order to change a gear ratio from a first speed gear ratio to a second speed gear ratio or from the second speed gear ratio to the first speed gear ratio, the power transmission between the shift shaft 200 and the first output gear 410 may be temporarily blocked. In this case, the electric vehicle driving apparatus is capable of continuously transmitting the power to the differential gear 500 through the bypass shaft 300, 300' and the second output gear 420.

In FIG. 1A, the electric vehicle driving apparatus may further include a brake device 280 at an outside of the shift shaft 200.

The brake device 280 may forcibly stop driving of the wheel. However, the brake device 280 is not limited to the position shown in FIG. 1A, and the brake device 280 may be disposed at any of various positions in the electric vehicle driving apparatus according to the present disclosure.

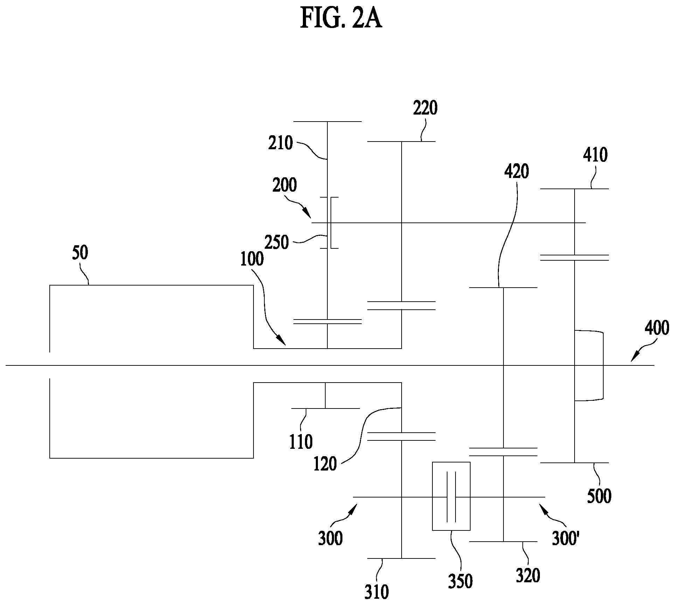

FIGS. 2A to 4B are diagrams schematically illustrating a power transmission flow of an electric vehicle driving apparatus according to an example embodiment of the present disclosure.

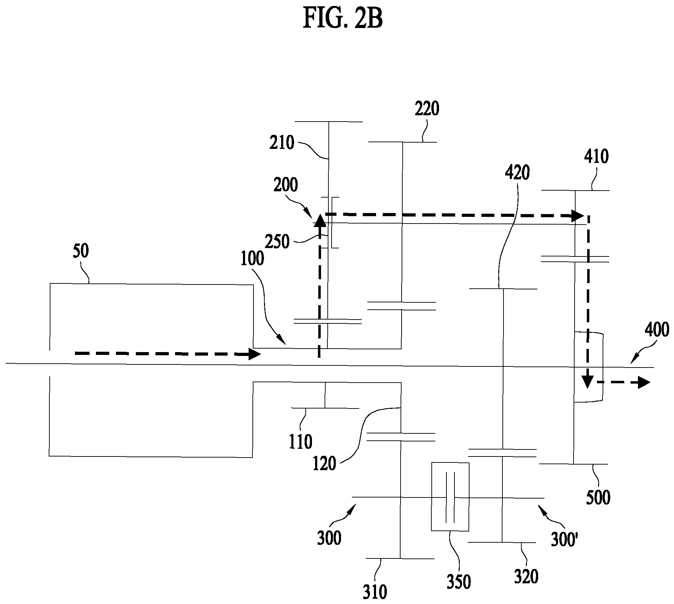

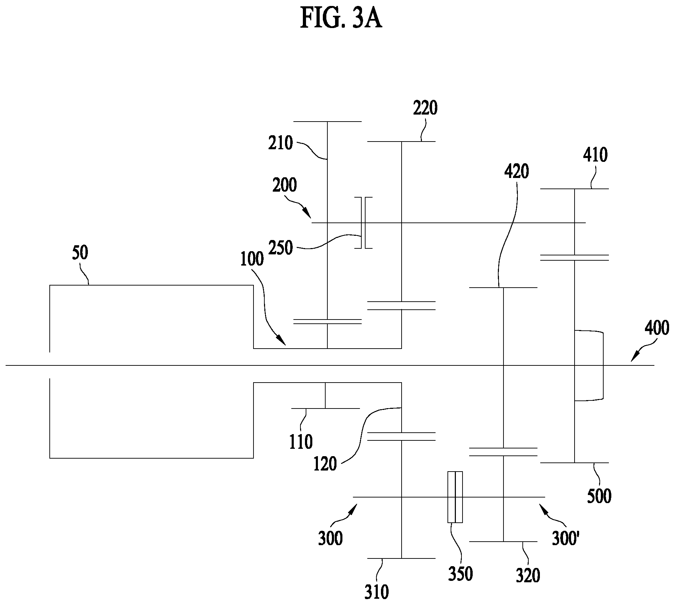

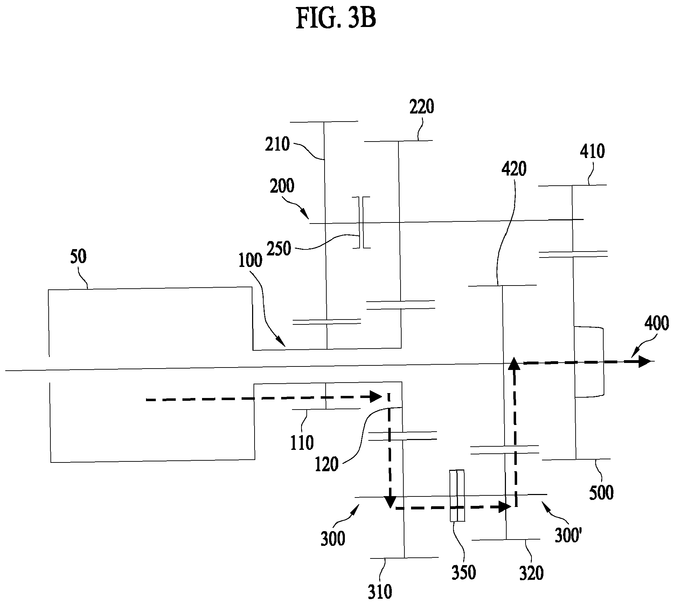

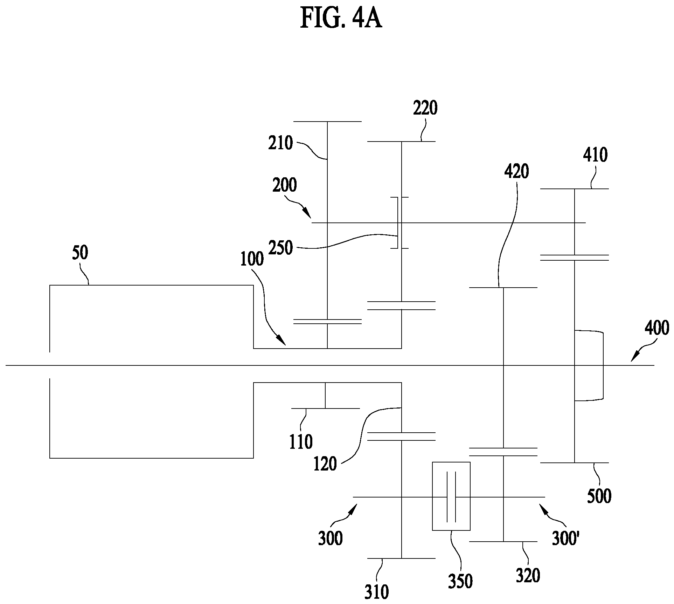

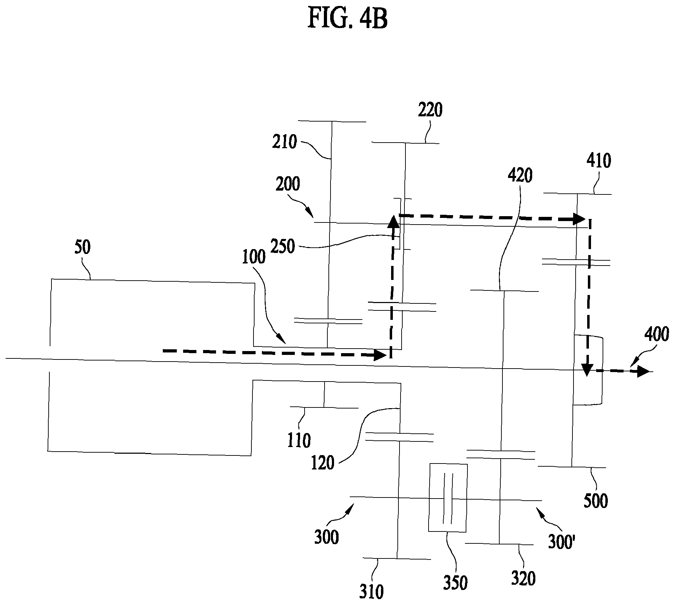

Specifically, FIGS. 2A and 2B are diagrams illustrating a power transmission flow in the case where an electric vehicle is driven in a first speed gear ratio. In addition, FIGS. 4A and 4B are diagrams illustrating a power transmission flow in the case where an electric vehicle is driven at a second speed gear ratio. FIG. 3A and 3B are diagrams illustrating a power transmission flow in a shifting state in which a gear ratio is changed from the first speed gear ratio to the second speed gear ratio or from the second speed gear ratio to the first speed gear ratio.

Referring to FIGS. 2A and 2B, in the electric vehicle driving apparatus, based on operations of the synchronizer 250 and the clutch 350, power may be transmitted from the driving motor 50 to a wheel through the input shaft 100, the first motor gear 110, the first bypass gear 210, the shift shaft 200, the first output gear 410, and the differential gear 500 in sequence.

The wheel may be driven at the first speed gear ratio.

As illustrated in FIGS. 2A and 2B, in order to drive the wheel at the first speed gear ratio, the synchronizer 250 may couple the first shift gear 210 and the shift shaft 200. For example, in response to a sleeve included in the synchronizer 250 being coupled with the first shift gear 210, the synchronizer 250 may couple the first shift gear 210 and the shift shaft 200, and accordingly, the first shift gear 210 and the shift shaft 200 may rotate integrally with each other.

In this case, the clutch 350 may be in a disengaged state so that the power transmission between the first bypass gear 310 and the second bypass gear 320 is restricted. For example, in response to the disengagement of the clutch 350, the power transmission between a first bypass shaft 300 coupled with the first bypass gear 310 and a second bypass shaft 300' coupled with the second bypass gear 320 may be blocked, so that the first bypass gear 310 and the second bypass gear 320 may operate independently of each other.

Referring to FIGS. 4A and 4B, in the electric vehicle driving apparatus, based on operations of the synchronizer 250 and the clutch 350, power may be transmitted from the driving motor 50 to a wheel through the input shaft 100, the second motor gear 120, the second shift gear 220, the shift shaft 200, the first output gear 410, and the differential gear 500 in sequence.

The wheel may be driven at the second speed gear ratio.

As illustrated in FIGS. 4A and 4B, in order to drive the wheel at the second speed gear ratio, the synchronizer 250 may couple the second shift gear 220 and the shift shaft 200. For example, a sleeve included in the synchronizer 250 may relatively move in an axial direction of the shift shaft 200 to be coupled with the second shift gear 220. Through a sleeve coupled with the second shift gear 220, the second shift gear 220 and the shift shaft 200 are coupled with each other. The shift shaft 200 may rotate integrally with the second shift gear 220 in accordance with a rotation of the second shift gear 220.

Even in this case, the clutch 350 may be in a disengaged state similar to the state driven at the first speed gear ratio as described with reference to FIGS. 2A and 2B. The clutch 350 may restrict power transmission between the first bypass gear 310 and the second bypass gear 320. Accordingly, the first bypass gear 310 and the second bypass gear 320 may operate independently of each other.

In order to change the aforementioned state in which the electric vehicle is driven at the first speed gear ratio (refer to FIGS. 2A and 2B) to the state in which the electric vehicle is driven at the second speed gear ratio (refer to FIGS. 4A and 4B), the sleeve of the synchronizer 250 may be decoupled from the first shift gear 210 and coupled with the second shift gear 220.

Conversely, in order to change the state in which the electric vehicle is driven at the second speed gear ratio (refer to FIGS. 4A and 4B) to the state in which the electric vehicle is driven at the first speed gear ratio (refer to FIGS. 2A and 2B), the sleeve of the synchronizer 250 may be decoupled from the second shift gear 220 and coupled with the first shift gear 210.

As such, to change the speed of the electric vehicle, in a state in which coupling between the shift gears and the shift shaft 200 is released by the synchronizer 250, the electric vehicle driving apparatus may transmit power in accordance with a flow illustrated in FIGS. 3A and 3B.

Referring to FIGS. 3A and 3B, based on operations of the synchronizer 250 and the clutch 350, the electric vehicle driving apparatus may transmit power from the driving motor 50 to a wheel through the input shaft 100, the second motor gear 120, the first bypass gear 310, the first bypass shaft 300, the second bypass shaft 300' the second bypass gear 320, the second output gear 420, and the differential gear 500 in sequence.

The wheel may be driven at a third speed gear ratio. The third speed gear ratio may be a ratio ranging between the first speed gear ratio and the second speed gear ratio.

FIGS. 3A and 3B, the synchronizer 250 may not couple the shift gears and the shift shaft 200. For example, the sleeve of the synchronizer 250 may not be coupled with neither the first shift gear 210 nor the second shift gear 220 while positioned between the first shift gear 210 and the second shift gear 220. In this case, power of the first shift gear 210 or the second shift gear 220 may not be transmitted to the shift shaft 200.

In FIGS. 3A and 3B, the clutch 350 may be in an engaged state and thus may transmit the power of the first bypass gear 310 to the second bypass gear 320. For example, in response to the engagement of the clutch 350, the first bypass shaft 300 coupled with the first bypass gear 310 may be connected to and the second bypass shaft 300' coupled with the second bypass gear 320 depending on the engagement of the clutch 350.

As described above, according to example embodiments of the present disclosure, in a synchronizing state in which the electric vehicle is driven at the first speed gear ratio or the second speed gear ratio, the electric vehicle driving apparatus may connect the synchronizer 250 to one component and release an engagement of the clutch 350. Also, in a shifting state in which the speed is changed from the first speed gear ratio to the second speed gear ratio or changed from the second speed gear ratio to the first speed gear ratio, the electric vehicle driving apparatus may disconnect the synchronizer 250 from one component and engage the clutch 350 so that the power is continuously transmitted to the wheel.

To change a gear ratio from the first speed gear ratio to the second speed gear ratio or from the second speed gear ratio to the first speed gear ratio, the electric vehicle may perform speed synchronization so that a speed of the driving motor 50 corresponds to a corresponding gear stage.

The electric vehicle driving apparatus according to example embodiments of the present disclosure may not just continuously transmit power to a wheel even during a period of the synchronization, but also transmit power corresponding to the third speed gear ratio ranging between the first speed gear ratio and the second speed gear ratio in a speed synchronization stage for shifting a speed of the driving motor 50. Accordingly, it is possible to more efficiently shift a speed and provide a user with a smooth shifting feeling.

According to an embodiment, the electric vehicle driving apparatus may further include a processor (not shown) electrically connected to the synchronizer 250 and the clutch 350. Using the processor, the electric vehicle driving apparatus may automatically control operations of the synchronizer 250 and the clutch 350.

For example, when a first signal (e.g., a shifting request signal) is detected in the synchronizing state in which the electric vehicle is driven at the first speed gear ratio or the second speed gear ratio, the processor of the electric vehicle driving apparatus may operate the electric vehicle in the shifting state by controlling the synchronizer 250 and the clutch 350 such that the synchronizer 250 is decoupled from one component and the clutch 350 is engaged based on the first signal.

In doing so, the coupling between the shift shaft 200 and the plurality of shift gears may be released and the power from the first bypass gear 310 be transmitted to the second bypass gear 320. For example, the electric vehicle may be driven at the third speed gear ratio ranging between the first speed gear ratio and the second speed gear ratio, based on the power transmitted through the second bypass gear 320, the second output gear 420, and the differential gear 500 in sequence.

For example, when a second signal (e.g., a shifting-completed signal) is detected in the shifting state of the electric vehicle, the processor of the electric vehicle driving apparatus may control the synchronizer 250 and the clutch 350 based on the second signal, so that the synchronizer 250 is coupled with any one shift gear from the plurality of shift gears and the clutch 350 is disengaged.

In doing so, the shift shaft 200 may be coupled with any one shift gear from the plurality of shift gears and power transmission between the first bypass gear 310 and the second bypass gear 320 may be restricted. Accordingly, the electric vehicle may be driven based on a gear ratio corresponding to a shift gear coupled with the synchronizer 250.

According to another example embodiment, the synchronizer 250 and the clutch 350 may be operated based on a mechanical coupling scheme instead of the control of the processor.

FIGS. 5A and 5B are diagrams illustrating arrangement of a clutch of an electric vehicle driving apparatus according to example embodiments of the present disclosure.

Likewise as described above with reference to FIGS. 1A and 1B, the electric vehicle driving apparatus according to example embodiments of the present disclosure may selectively transmit power between the first bypass gear 310 and the second bypass gear 320 using a clutch 350 disposed at an outside of the bypass shaft 300, 300'.

According to an embodiment, as illustrated in FIGS. 1A and 1B, the clutch 350 may be disposed between the first bypass gear 310 and the second bypass gear 320. In this case, the clutch 350 may be provided in a small size to minimize a space occupied by the clutch 350.

As illustrated in FIG. 5A, the clutch 350 may be integrally formed with the first bypass gear 310 on one side of the first bypass gear 310. In this case. A bearing of the first bypass gear 310 moves, thereby being interfered with the driving motor 50.

According to another embodiment, as illustrated in FIG. 5B, the clutch 350 may be integrally formed with the second bypass gear 320 on one side of the second bypass gear 320. When the clutch 350 is integrally formed with the second bypass gear 320, a space for the clutch 350 may be easily secured but a volume of the transmission (e.g., a gear box) may be affected.

As described above, the clutch 350 disposed at the bypass shaft 300, 300' may be arranged at any of various location according to design, and the location of the clutch 350 is not limited to the locations shown in FIGA. 1A to 4B.

According to an electric vehicle driving apparatus according to example embodiments of the present disclosure, it is possible to implement a transmission for providing a shift function with two or more shift speeds, the transmission which is implemented in a co-axial type, thereby improving spatial usability of the inside of an electric vehicle.

In addition, as a power bypass path is formed so as to perform consecutive power transmission even during speed shifting, it is possible to minimize a shift impact on a user and provide an electric vehicle with improved driving performance.

It is apparent to those skilled in the art that the present disclosure may be materialized in other specific forms without departing from the essential characteristics of the present disclosure.

The detailed description should not be construed as being limitative from all aspects, but should be construed as being illustrative. The scope of the present disclosure should be determined by reasonable analysis of the attached claims, and all changes within the equivalent range of the present disclosure are included in the scope of the present disclosure.

## Claims

1. An electric vehicle driving apparatus, comprising:
a motor;
a plurality of shafts comprising an input shaft, an output shaft coaxially arranged with the input shaft, a shift shaft spaced apart from the input shaft, and a bypass shaft;
a plurality of motor gears coupled with an outer circumferential surface of the input shaft;
a plurality of shift gears externally engaged with the plurality of motor gears and selectively coupled with the shift shaft based on an operation of a synchronizer;
a plurality of bypass gears coupled with an outer circumferential surface of the bypass shaft, and comprising a first bypass gear externally engaged with at least one motor gear of the plurality of motor gears and a second bypass gear spaced apart from the first bypass gear;
a plurality of output gears comprising a first output gear coupled with an outer circumferential surface of the shift shaft and a second output gear externally coupled with the second bypass gear; and
a clutch configured to selectively allow power transmission between the first bypass gear and the second bypass gear.

2. The electric vehicle driving apparatus of claim 1, wherein the clutch is configured to:
when the synchronizer couples at least one shift gear of the plurality of shift gears with the shift shaft, restrict the power transmission between the first bypass gear and the second bypass gear; and
when the synchronizer decouples the plurality of shift gears from the shift shaft, allow the power transmission between the first bypass gear and the second bypass gear.

3. The electric vehicle driving apparatus of claim 1 or 2, wherein:
the synchronizer comprises a sleeve that moves in a direction along an axis of the shift shaft; and
the synchronizer, in response to the sleeve being engaged with at least one shift gear from the plurality of shift gears, couples at least one shift gear with the shift shaft.

4. The electric vehicle driving apparatus of claim 1, 2, or 3, wherein the second output gear is coupled with an outer circumferential surface of the output shaft such that the second output gear rotates about a rotation axis of the output shaft.

5. The electric vehicle driving apparatus of any one of claims 1 to 4, wherein:
the plurality of motor gears comprises a first motor gear and a second motor gear;
the plurality of shift gears comprises a first shift gear externally engaged with the first motor gear and a second shift gear externally engaged with the second motor gear; and
the first bypass gear is externally engaged with the second motor gear.

6. The electric vehicle driving apparatus of claim 5, wherein a third speed gear ratio corresponding to a ratio of power transmitted through the second motor gear, the first bypass gear, the second bypass gear, and the second output gear ranges between a first speed gear ratio corresponding to a ratio of power transmitted through the first motor gear, the first shift gear, and the first output gear, and a second speed gear ratio corresponding to a ratio of power transmitted through the second motor gear, the second shift gear, and the first output gear.

7. The electric vehicle driving apparatus of any one of claims 1 to 6, wherein the clutch comprises a friction clutch.

8. The electric vehicle driving apparatus of any one of claims 1 to 7, further comprising a differential gear coupled with the output shaft and configured to selectively receive power from the first output gear or the second output gear.

9. The electric vehicle driving apparatus of claim 8, further comprising a processor electrically connected to the synchronizer and the clutch,
wherein the processor is configured to control operations of the synchronizer and the clutch based on one or more electric signals.

10. The electric vehicle driving apparatus of claim 9, wherein the processor is configured to:
based on a first electrical signal of the one or more electrical signals, control the synchronizer to decouple the plurality of shift gears from the shift shaft, and engage the clutch to allow the power transmission between the first bypass gear and the second bypass gear; and
based on a second signal, disengage the clutch to restrict the power transmission between the first bypass gear and the second bypass gear, and control the synchronizer to couple at least one shift gear of the plurality of shift gears with the shift shaft.

11. The electric vehicle driving apparatus of claim 10, wherein the differential gear is configured to:
when the synchronizer is controlled based on the first electrical signal, receive power from the driving motor through the first output gear; and
when the synchronizer is controlled based on the second signal, receive the power from the driving motor through the second output gear.

12. The electric vehicle driving apparatus of any one of claims 1 to 11, wherein the input shaft comprises a hollow shaft, and the output shaft comprises a solid shaft.

13. The electric vehicle driving apparatus of any one of claims 1 to 12, wherein the clutch is disposed between the first bypass gear and the second bypass gear.

14. The electric vehicle driving apparatus of any one of claims 1 to 13, wherein the clutch is integrally formed with at least one bypass gear of the plurality of bypass gears.

15. The electric vehicle driving apparatus of any one of claims 1 to 14, further comprising a brake device coupled with the shift shaft.

## Amended claims

### Amended claims in accordance with Rule 137(2) EPC.

1. An electric vehicle driving apparatus, comprising:
a driving motor (50);
a plurality of shafts comprising an input shaft (100), an output shaft (400) coaxially arranged with the input shaft (100), a shift shaft (200) spaced apart from the input shaft (100), and a bypass shaft (300, 300');
a first motor gear (110) and a second motor gear (120) coupled with an outer circumferential surface of the input shaft (100);
a first shift gear (210) and a second shift gear (220) externally engaged with any one of the first motor gear (110) and the second motor gear (120)and selectively coupled with the shift shaft (200) based on an operation of a synchronizer (250);
a first bypass gear (310) coupled with an outer circumferential surface of the bypass shaft (300, 300') and externally engaged with at least one of the first motor gear (110) and the second motor gear (120) and a second bypass gear (320) spaced apart from the first bypass gear (310);
a first output gear (410) coupled with an outer circumferential surface of the shift shaft (200) and a second output gear (420) externally coupled with the second bypass gear (320); and
a clutch (350) disposed at an outside of the bypass shaft (300, 300') and configured to selectively allow power transmission between the first bypass gear (310) and the second bypass gear (320).

2. The electric vehicle driving apparatus of claim 1, wherein the clutch (350) is configured to:
when the synchronizer (250) couples at least one of the first shift gear (210) and the second shift gear (220) with the shift shaft (200), restrict the power transmission between the first bypass gear (310) and the second bypass gear (320); and
when the synchronizer (250) decouples the first shift gear (210) and the second shift gear (220) from the shift shaft (200), allow the power transmission between the first bypass gear (310) and the second bypass gear (320).

3. The electric vehicle driving apparatus of claim 1, wherein:
the synchronizer (250) comprises a sleeve that moves in a direction along an axis of the shift shaft (200); and
the synchronizer (250), in response to the sleeve being engaged with at least one of the first shift gear (210) and the second shift gear (220), couples the at least one of the first shift gear (210) and the second shift gear (220) with the shift shaft (200).

4. The electric vehicle driving apparatus of claim 1, wherein the second output gear (420) is coupled with an outer circumferential surface of the output shaft (400) such that the second output gear (420) rotates about a rotation axis of the output shaft (400).

5. The electric vehicle driving apparatus of claim 1, wherein:
the first shift gear (210) externally engaged with the first motor gear (110) and the second shift gear (220) externally engaged with the second motor gear (120); and
the first bypass gear (310) is externally engaged with the second motor gear (120).

6. The electric vehicle driving apparatus of claim 5, wherein a third speed gear ratio corresponding to a ratio of power transmitted through the second motor gear (120), the first bypass gear (310), the second bypass gear (320), and the second output gear (420) ranges between a first speed gear ratio corresponding to a ratio of power transmitted through the first motor gear (110), the first shift gear (210), and the first output gear (410), and a second speed gear ratio corresponding to a ratio of power transmitted through the second motor gear (120), the second shift gear (220), and the first output gear (410).

7. The electric vehicle driving apparatus of claim 1, wherein the clutch (350) comprises a friction clutch.

8. The electric vehicle driving apparatus of claim 1, further comprising a differential gear (500) coupled with the output shaft (400) and configured to selectively receive power from the first output gear (410) or the second output gear (420).

9. The electric vehicle driving apparatus of claim 8, further comprising a processor electrically connected to the synchronizer (250) and the clutch (350),
wherein the processor is configured to control operations of the synchronizer (250) and the clutch (350) based on one or more electric signals.

10. The electric vehicle driving apparatus of claim 9, wherein the processor is configured to:
based on a first electrical signal of the one or more electrical signals, control the synchronizer (250) to decouple the any one of the first shift gear (210) and the second shift gear (220) from the shift shaft (200), and engage the clutch (350) to allow the power transmission between the first bypass gear (310) and the second bypass gear (320); and
based on a second signal, disengage the clutch (350) to restrict the power transmission between the first bypass gear (310) and the second bypass gear (320), and control the synchronizer (250) to couple at least one of the first shift gear (210) and the second shift gear (220) with the shift shaft (200).

11. The electric vehicle driving apparatus of claim 10, wherein the differential gear (500) is configured to:
when the synchronizer (250) is controlled based on the first electrical signal, receive power from the driving motor (50) through the first output gear (410); and
when the synchronizer (250) is controlled based on the second signal, receive the power from the driving motor (50) through the second output gear (420).

12. The electric vehicle driving apparatus of claim 1, wherein the input shaft (100) comprises a hollow shaft, and the output shaft (400) comprises a solid shaft.

13. The electric vehicle driving apparatus of claim 1, wherein the clutch (350) is disposed between the first bypass gear (310) and the second bypass gear (320).

14. The electric vehicle driving apparatus of claim 1, wherein the clutch (350) is integrally formed with at least one of the first bypass gear (310) and the second bypass gear (320).

15. The electric vehicle driving apparatus of claim 1, further comprising a brake device (280) coupled with the shift shaft (200).
